# EUROPEAN PATENT APPLICATION

(11) **EP 3 742 024 A1**
(43) Date of publication of application: **25.11.2020**
(21) Application number: 19000247.7
(22) Date of filing: 20.05.2019
(51) Int. Cl.: F16H 48/36

(54) **VARIABLE TORQUE DIFFERENTIAL**

(71) Applicant: Kontopoulos, Florentina-Magdalena, 60596 Frankfurt am Main (DE); Kontopoulos, Grigorios-Maximilian, 71083 Herrenberg (DE)
(72) Inventor: Kontopoulos, Konstantinos, 60596 Frankfurt am Main (DE)

(57) **Abstract**

The present invention relates to a differential, and in particular to an automotive differential, which transfers power from an input member, for example connected to a power transmission system of an automotive engine, to a first and a second output member, for example half-shafts of a drive axle of a vehicle. The differential thereby comprises a first gear connected to the first output member, a second gear connected to the second output member, and a third gear engaging both the first and second gear.

## Description

### 1. Technical field

The present invention relates to a differential, in particular an automotive differential, a method for operating such a differential, and a vehicle comprising such a differential.

### 2. Technical background

When a wheeled vehicle, such as an automobile, turns, an outer wheel (i.e. a wheel travelling around the outside of the turning curve) typically rotates with greater speed compared to an inner wheel, as the outer wheels have to roll further than the inner wheels. For this purpose, a differential is typically applied which allows for the outer drive wheel to rotate faster than the inner drive wheel during a turn.

The basic differential is the so-called open differential, by which the torque from an engine is equally divided to each wheel. The rotational speed may differ for each wheel, wherein the average of the rotational speed of the driving wheels equals the input rotational speed provided by the engine. An increase of speed of one (outer) drive wheel is thus balanced by a respective decrease of speed of the other (inner) drive wheel.

Upon turning, the weight of a vehicle such as a car is typically transferred to the outer wheels, due to inertia effects. As a result, the outer wheels have a greater friction compared to the inner wheels. For the inner wheels, friction and traction decreases. As will be appreciated by the person skilled in the art, upon driving turns, the outer wheels can handle increased amount of engine torque with equivalent decrease in the amount of torque handled by the inner wheels. As an open differential equally divides the torque to the wheels, there is a chance that the inner wheels spin or that understeering phenomena or over steering phenomena occur, especially when the vehicle accelerates while turning.

Furthermore, when a wheel faces a low friction surface (e.g. a muddy or an icy road), the equal distribution of the torque to the wheels is disadvantageous, as the torque transferred to the wheel on the low friction surface is the same as the one transferred to the wheel on the higher friction surface.

In order to address these problems, different systems have been developed, where the differential can for example "lock". Such a locking differential may restrict each of the two wheels on an axle to the same rotational speed without regard to available traction or differences in resistance seen at each wheel.

The prior art systems may be divided in torque-sensitive differentials, which use mechanical friction of the parts in order to create the adequate torque difference between the half-shafts, and in differentials using friction discs. The torque-sensitive differentials transfer torque to the wheels rotating with a smaller rotational speed, while the differentials using friction discs calculate the difference of the rotational speed of the wheels and engage or disengage the friction discs accordingly.

However, there still exists a need for distributing torques to the wheels in an optimal manner. It is thus an objective of the present invention to provide an improved differential, particularly to overcome the above-mentioned deficiencies.

The present invention provides a solution according to the subject matter of the independent claims.

### 3. Summary of the invention

The invention relates to a differential, and in particular to an automotive differential. The differential may thereby allow for transferring a rotational force from an input member (which may be an input shaft or drive shaft connected to an automotive engine) to a first and a second output member (which maybe half-shafts of a drive axle). The differential may also be provided in form of a central differential in all wheel drive (AWD) vehicles, to distribute torques/rotational forces between the front and rear axle.

The differential comprises a first gear connected to the first output member, and a second gear connected to the second output member. The first and second gear may thereby be non-rotatably connected to the respective output member, i.e. may be connected in a rotationally fixed manner to the respective half-shafts. Thus, when the first gear rotates, also the first output member or respective half-shaft rotates. The first and second gear may be provided in form of a pinion, for example.

The differential further comprises a third gear (consisted of a set of gear wheels), engaging both the first and second gear. The third gear, which is consisted of a set of gear wheels, may thereby be connected to the input member, non-rotatably, i.e. in a rotationally fixed manner. Hence, for example, if the input shaft rotates, also the third gear connected thereto rotates. Due to the engagement of the third gear, consisted of a set of gear wheels, with the first gear and second gear, a rotational force from the input member may be transferred via the third gear and first/second gear to the first/second output member.

The differential further comprises actuating means adapted to move the first and second gears in order to control a torque ratio transferred to the first and second output member. First and second torques transferred to first and second output member respectively, result in a torque ratio which is the one that is essentially defined by the proposed differential. Thus, by moving the first and second gears, the first torque (assigned to the first output member) may be set to a desired value always in relation to the second torque (assigned to the second output member). Moving the first and second gears may thereby comprise repositioning, reorienting or realigning. By moving the first and second gears, using actuating means, it is possible to change (for a given input force applied to the differential) the first torque, in relation to the second torque, transferred to the first output member, so that a torque may be applied to the first output member different from a torque applied to the second output member. Thereby, a desired first torque may be transferred to the first output member or the respective half-shaft, without interactions or interferences with other systems like ABS, ESP, ASR, and the like (the same goes for the respective second torque to the second output member). By controlling the torque ratio transferred to the first and second output members with the actuating means, over steering and understeering phenomena can be effectively reduced by decreasing the possibility of spinning wheels, so that it is possible to drive turns in a safer, easier and also faster manner. In addition less tire wear is achieved and improved fuel economy.

A desired torque ratio between the first and second output members can be set by axially moving the first and second gear wheels.

The person skilled in the art understands that additional advantages are offered with an additional degree of freedom, which may be preferably provided for the differential, in order to change a torque ratio by moving the first and second gears. As an example, the third gear may be provided such that the orientation of the third gear is not fixed with regard to the orientation of the first and/or second gear. Although, the third gear may be provided such that its main axis can be reoriented, it will not due to the layout as a result of engagement of the planetary members with their assigned sun gears, which create equal and opposite torques in relation to the axis of rotation of the third gear. Hence, the third gear may be freely mounted in the differential, with regard to the first and/or second gears, allowing for the additional degree of freedom. When the input member acts on the third gear, and to the engagement of the third gear with the first gear and the second gear, forces act on the third gear which eventually result in a particular torque ratio transferred to the output members. Hence, due to differing positions of the first and second gear in the differential, different forces may act on the third gear, eventually leading to differing forces transferred from the third gear to the first and second gears and therefore to the two output members.

Preferably, the third gear of the differential is configured movable in a plane orthogonal to a radial direction of the first gear. Thus, moving the first and second gears by means of the actuating means, when external forces are applied to the differential (e.g. by an engine), transfer differing forces to the first and second gears defining a new torque ratio depending on the axial position of the actuating members. The additional degree of freedom providing to the third gear assists to the creation of various torque ratios. Moving the first and the second gears may hence cause a reconfiguration of the differential which essentially results (in relation to the positioning of the actuating members) in a particular torque ratio between the first and second output member. The person skilled in the art thereby understands that, by introducing a further degree of freedom into the system, by configuring the third gear to be movable as described, different torque ratio can be set by moving the first and the second gear. Eventually, by allowing for such an additional movement when axially moving the first and the second gears, the force transferred by the third gear to the first gear may differ from the force transferred by the third gear to the second gear, thus favorably leading to a desired torque ratio.

In a preferred embodiment, the first, second and third gear form a sun and planetary gear system. Thereby, the third gear (which is consisted of a set of gear wheels) may be provided as a planetary gear, and the first gear may be provided as a sun gear, and the second gear may also be provided as a sun gear. The structure (e.g. radius, number of gear teeth, etc.) of the first gear may be the same as the structure of the second gear. The first and the second gears may thereby be axially movable relative to the center of the differential between at least a first and a second axial position.

In an alternative the third gear, consisted of a set of gear wheels, may be actuated by the actuating means and the first and second gears may be provided as axially unmovable. As a person skilled in the art understands, this alternative configuration follows the same basic principles as the one, that the first and second gears are provided as movable by actuating means and the third as being not actuated.

Thus, in the configuration which the first and the second gears are provided as actuated, the first and second gears may be moved along a main axis of the first (or the second, since the two output members are provided as coaxial) output member. A distance between the first axial position of the first and second gears to the center of the differential may thereby be different to a distance between the second axial position of the first and second gears to the center of the differential. The actuating means may be adapted to move the first and the second gears between at least the first and the second axial position. As the transferred driving forces applied to the first gear via the sun and planetary gear system may depend on the distance of the first gear in relation to the center of the differential, it is thus possible to eventually adjust the first torque (by defining a torque ratio) transferred to the first output member by moving the first and the second gears, particularly by changing the axial position of the first gear (the same goes for the second torque due to the altered position of the second gear). The first and second gears may thereby be moved axially by the actuating means to a desired position, corresponding to a desired torque ratio.

As mentioned before an analogous operation is being followed when the position of the first and second gears in relation to the center of the differential is fixed and the third gear is actuated by actuating means.

The person skilled in the art understands that the first and the second gears may be axially (in relation to the main axis of the differential) movable between more than two axial positions. The first and the second gears may preferably be quasi-continuously axially movable between numerous axial positions, preferably between at least 2 positions, further preferred between at least 10 positions, further preferred between infinite positions. Each of the axial position may essentially correspond to a respective torque ratio between the output members. In both the alternatives the actuating gears (the first and second gears of the first alternative or the third gear, consisted of a set of gear wheels, of the second alternative) are considered to be moved (actuated) in an axial manner in relation to the main axis of the differential.

It will be appreciated that no particular torque values in each one of the first and second output members may be set, but rather desired torque ratios there between. For a constant number of engine revolutions of a vehicle, depending on the throttle, the total power is constant. When changing the position of the first and second gears provided as sun gears, the transferring torque ratio is altered in each output member, wherein the sum of the resulting power acting on the output members equals the total power transferred from the differential case.

Preferably, the differential further comprises a housing (differential case) engageable by the input member. Hence, the input member may engage the housing to transfer a rotational force to the differential. The third gear, which is consisted of a set of gear wheels, may be rotatably connected to the housing. Further preferred, the housing may support the planetary gear, and the planetary gear may comprise a first planetary gear member and a second planetary gear member. The planetary gear members may each rotate around their main axis thereof. The first planetary gear member may be engaged by the first gear, and the second planetary gear member may be engaged by the second gear. The first and second planetary gear member may be directly meshed to each other or meshed with the help of other gear wheels so that if the first planetary gear member rotates clock wisely, the second gear member rotates in the opposite direction. Further preferred, the differential further comprises a connection part connecting the first planetary gear member and the second planetary gear member. The connection part may, preferably, be configured movable relative to the housing in a plane orthogonal to a radial direction of the first gear, and the connection part may be supported in the housing to be movable as described. Hence, preferably, the connection part allows for rotation in a plane orthogonal to a radial direction of the first gear. The connection part may have any suitable shape and/or form to provide this functionality. This configuration allows for a reconfiguration of the differential when moving the first and the second gears, whereby essentially a particular torque ratio may be set. As the planetary gear members are supported by the connection part, essentially a different force is transferred via the planetary gear to the first gear than to the second gear, due to the axial difference in their position. Hence, the first torque transferred to the first output member may eventually differ from a second torque transferred to the second output member, resulting in a desired torque ratio.

Further preferred, the connection part may have an elongated form, having rounded ends. The connection part may thereby be provided in the housing such that it directly receives forces from the housing, preferably without any slippage, in a plane orthogonal to a main axis of the differential, or a main axis of the first gear and the first output member. The main axis of the differential may be defined by the main axis of the output members. The rounded ends may allow for a movement of the connection part in a plane orthogonal to a radial direction of the first gear. The connection part may rotate inside a recess provided in the housing. Thus, an additional degree of freedom is provided in a robust manner to the differential, allowing for reconfiguring the differential by moving the first gear. Alternatively the connection part may be in the form of planetary cases where the planetary gear members are housed.

Further preferred, the first planetary gear member extends through a first hole of the connection part, and the second planetary gear member extends through a second hole of the connection part (the first and second hole may be considered as one in a coaxial planetary gear arrangement or the holes assigned for the planetary gear members may be in the form of planetary cases). Thereby a particularly reliable support of the planetary gear is provided, and forces can be efficiently transferred from the housing via the connection part to the planetary gear members.

Preferably, the actuating means comprises a connection to external driving means. The external driving means may, for example, comprise a hydraulic pump, which may be part of a steering system of a car. Thus, in this example, when the steering system is operated to initiate a turn, the hydraulic pump may assist the motion of turning the steering wheel. In doing so, the hydraulic pump may also act on the actuating means, thereby moving the first and the second gears. The actuating means may further comprise a spring adapted to move the actuating gears in an opposite direction. Hence, the gear (or gears) may be axially moved back and forth by means of the external driving means, and the spring. In another preferred embodiment, the external driving means may particularly comprise a tie rod of a vehicle. Thus, by moving the tie rod, for example when initiating a turning movement of the vehicle, the tie rod may act on the actuating means to eventually move the first and the second gears. The person skilled in the art may understand that only the tie rod may urge the gears to move forth and back, or a double action hydraulic cylinder may provide this function, for example.

Generally preferred, the actuating means are adapted to move the first and second gears based on driving conditions. The driving conditions may thereby comprise speed, acceleration, vehicle dynamic sensors, wheel turning characteristics, and also a current inclination angle of the road, and so on. Such data may be collected by means of respective sensors, and may be processed in a respective computing unit. Thereby, an optimum torque combination for the wheels may be determined, and a respective command may be provided to the actuating means for moving the first and the second gears.

Preferably, the actuating means are adapted to move the first and the second gears such that the first torque transferred to the first output member is different from a second torque transferred to a second output member. Thus, it is possible to apply different torques to the wheels. Thus, a desired torque ratio can be set. When desired, equal torques can be provided to the two output members. When there is a need for torque variation between the two output members, a desired torque ratio can be set.

The present invention further relates to a method for operating a differential, wherein the differential may be in accordance with a differential set out above. The method thereby comprises the steps of determining a torque ratio to be transferred to the first and second output member of the differential, and moving the first and the second gears based on the determined torque ratio, so that the first torque is eventually transferred to the first output member and the second torque is eventually transferred to the second output member. As mentioned before the first and second torque are in relation to each other as part of the determined torque ratio. Preferably, the method further comprises the step of sensing driving conditions, and the step of determining the first and the second torque (that are going to be transferred to the first and second output members) may be based on the sensed driving conditions. Preferably, the first torque is different from a second torque transferred to the second output member according to the needs.

The present invention further relates to a vehicle comprising a differential according to a differential set out above. The differential may thereby be provided in a front drive axle, rear drive axle, and/or as a central differential in an AWD vehicle.

The present invention allows for easier and safer driving, easier parking, less tire wear, improved fuel efficiency, and the ability to take turns faster by reducing the phenomena of understeering or over steering, as different torques can readily be applied to different drive wheels. Furthermore, torques can be distributed in a desired manner between the front and the rear wheels in a AWD vehicle, and by providing three differentials according to the present invention, each wheel of an AWD vehicle can be provided with an individual torque.

As a person skilled in the art understands, the desired torque ratio being set by the movement of the first and second gears as explained above can alternatively be achieved by an axially fixed first and second gears (provided as sun gears) and an axially (in relation to the main axis of the differential) movable third gear (provided as planetary gear and consisted of a set of gear wheels). As a result by the axial (in relation to the main axis of the differential) movement of the third gear, which is consisted of a set of gear wheels, forces acting on the first and second gear will defer, resulting in various torque ratios, depending on the axial (in relation to the main axis of the differential) position of the third gear.

### 4. Description of preferred embodiments

In the following, the present invention will be described with reference to the figures. Therein, similar elements are provided with same reference numbers. It shows:
- Fig. 1: a sectional view of a differential according to an embodiment of the invention;
- Fig. 2: a sectional view of individual parts of a differential according to the embodiment illustrated in Fig. 1;
- Fig. 3: individual parts of a differential according to the embodiment illustrated in Fig. 1;
- Fig. 4: a sectional view of an alternative differential according to an embodiment of the invention;
- Fig. 5: individual parts of a differential according to the embodiment illustrated in Fig. 4;
- Fig. 6: a sectional view of individual parts of a differential according to the embodiment illustrated in Fig. 4;
- Fig. 7: a view of individual parts of an alternative differential;
- Fig. 8: individual parts of a differential according to the embodiment illustrated in Fig. 7.

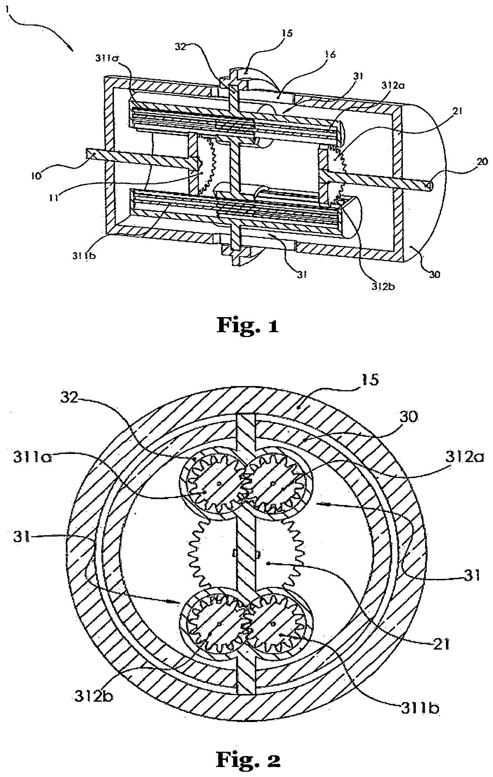

Fig. 1 illustrates a sectional view of a differential 1 according to an embodiment of the invention. The differential 1 is thereby provided as a sun and planetary gear system. A first half-shaft 10 is connected to a first sun gear 11 in a rotationally fixed manner. Hence, when the first half-shaft 10 rotates, the first sun gear 11 rotates in a similar manner. Similarly, a second half-shaft 20 with a second sun gear 21 are provided. The sun gears 11, 21 are provided in a housing 30 of the differential 1, which further houses a planetary gear 31, consisted of a set of gear wheels. Additional planetary gears (also consisted of sets of gear wheels) can be added to the design behaving in a similar manner as the presented planetary gear 31 which is consisted of a set of gear wheels. The housing 30 may be engaged by a drive shaft, for example, connected to an engine as will be appreciated by the person skilled in the art. For example, the housing 30 may be rotated by engaging a crown wheel with a drive shaft of a vehicle. A differential ring gear may be concentrically attached to the differential housing 30 of the differential 1 accompanied by a drive pinion, for transferring rotations from an engine to the differential 1.

In the presented layout the planetary gear 31, consisted of a set of gear wheels, is consisted of two planetary gear members assigned to every sun gear. It is going without mentioning that the planetary gears (and the planetary gear members in general) assigned to each sun gears may vary. In addition the planetary gear members (311a, 311b engaged to sun gear 11 and 312a, 312b engaged to sun gear 12) in the demonstrated configuration are meshed with each other and as a result when the one rotates, for example in a clockwise manner, the other rotates in an opposite manner. As it is obvious the presented way of interaction between the planetary gear members assigned to each sun gear (11, 21) is not restrictive but can be generalized in any way that the planetary gear members rotate in an opposite manner to each other. Alternative ways of planetary gear member interaction that lead to transferring forces and torques will be described further on.

Each planetary gear 31, consisted of a set of gear wheels, comprises first planetary gear members 311a, 311b and second planetary gear members 312a, 312b. Planetary gear members 311a and 312a are constantly meshed to each other and so does the planetary gear members 311b and 312b resulting in opposite rotation between the meshed planetary gear members. As a result there are two couples of gears (311a coupled to 312a and 311b coupled to 312b) and two more pairs of gears, one pair per sun (311a paired with 311b to sun gear 11 and 312a paired with 312b to sun gear 21). For providing the general functionality of a differential, the first planetary gear members 311a, 311b are engaged by the first sun gear 11, while the second planetary gear members 312a, 312b are engaged by the second sun gear 21, and the first planetary gear members 311a, 311b are rotatably connected to the second planetary gear members 312a, 312b (each of the first planetary gear members rotatably connected to their corresponding second planetary gear members). The first and second planetary gear members 311, 312 are supported within the housing 30 and a connection part 32 is provided, in which all of the planetary gear members are housed. The connection part 32 provides for a fixed orientation of the first planetary gear members 311a, 311b relative to the second planetary gear member 312a, 312b. As will be appreciated by the person skilled in the art, when the housing 30 is forced to rotate, forces are applied via the connection part 32 to the planetary gear members and from there to the sun gears 11,21 (and eventually to the two output members 10,20). In the embodiment illustrated in Fig. 1, the planetary gear 31, consisted of a set of gear wheels, is allowed to move or reorient relative to the housing 30 in a plane orthogonal to a radial direction of the sun gears 11, 21. Thereby, an additional degree of freedom is provided. Essentially due to the diametrically opposed planetary gear members on each sun gear the planetary gear 31 or the connection part 32 will not rotate in a plane orthogonal to a radial direction of the sun gears although such a rotation is allowed by the configuration. The additional degree of freedom which is provided benefits the force transferring between the interacting components.

Furthermore, as shown in Fig. 1, an actuating ring 15 is provided by which the third gear 31, consisted of a set of gear wheels, is moved axially (in relation to the main axis of the differential case) with the help of according actuating means. In this configuration the first and second gears provided as sun gears 11, 21 are axially fixed to the configuration. The actuating ring 15 is constantly interacting with the connection part 32 and the movement of the connection part 32 is guided by a slot like recess 16 in the differential case 30 (additional slot like recesses are provided in every support of the connection part 32). This slot like recess 16 assists with the linear movement of the connection part 32 without interfering with the additional degree of freedom which is given to the system (rotation in a plane orthogonal to a radial direction of the sun gears). As a consequence when a specific torque ratio is chosen, actuating means will reposition the actuating ring 15 and as a result the connection part 32 (and the third gear 31 in general) will follow resulting in a torque ratio being born by the new layout of the sun and planetary gears. The actuating means that repositions the actuating ring 15 may be mechanically driven, electrically driven, and/or, hydraulically driven. For example, the actuating means may be connected to a hydraulic pump. The actuating means are thereby adapted to move the actuating ring 15 and as a result the connection part 32 and the third gear 31 in general along the main axis of the differential. As will be appreciated by the person skilled in the art, by moving the connection part 32 and the third gear 31, consisted of a set of gears, by actuating means, the transferred driving forces applied onto the sun gears 11, 21 via the planetary gear 31 change, depending on the distance of third gear 31 in relation to the center of the differential 1. By repositioning the third gear 31, a different torque ratio is being set, due to different forces applied from the planetary gears 31, consisted of a set of gear wheels, to the sun gears 11, 21.

As will be appreciated by a person skilled in the art, when the actuating means reposition third gear 31, consisted of a set of gear wheels, at a distance in relation to the center of the differential and as a result sun gear 21 is "closer" to the third gear 31 (in relation to the distance of the sun gear 11), and the differential case is forced to rotate (e.g. by an engine), forces act on the connection part 32. These forces that act on the connection part 32 are transferred to the planetary gear members 311a, 311b, 312a, 312b. The forces act on the planetary gear member 311a, 311b are different in relation to the ones that act on the planetary gear member 312a, 312b with greater forces eventually acting on sun gear 21 in comparison to the lesser forces eventually acting on sun gear 11. Since both sun gear 11, 21 have the same radii, a new torque ratio M₁₁ / M₂₁ is created. Hence by moving the connection part 32 and as a result the third gear 31, which is consisted of a set of gear wheels, a desired torque ratio can be set. As a result according to the needs, an optimum torque combination can be set, resulting in different (or equal) torque outputs for each half shaft 10, 20 by repositioning planetary gear 31, which is consisted of a set of gear wheels, with the help of actuating means and actuating ring 15.

Fig. 2 illustrates a sectional view of the housing 30 according to the embodiment of Fig. 1. In this illustration the form of the connection part 32 and the gear layout in general is more visible. As can be seen the connection part 32 provides the additional degree of freedom (i.e. rotation in a plane orthogonal to a radial direction of the sun gears) and two planetary cases that house the planetary gear members 311a, 311b, 312a, 312b. In addition the planetary cases overlap in the center of the connection part 32 and the housed planetary gear members mesh, resulting in an opposite rotation of the one planetary gear member upon rotation of the other. It is worth mentioning that the presented connection part 32 houses two planetary gear members in connection with every sun gear (four planetary gear members in total) and the planetary gear members for each sun gear are arranged diametrically opposed to each other. Having said that the depicted planetary gear members 311a, 311b mesh with sun gear 11 and planetary gear members 312a, 312b mesh with sun gear 21. In addition the planetary gear members 311a, 312a mesh with each other and so do the planetary gear members 311b, 312b contributing to the well-known operation of the differential. Finally as it is obvious the planetary gear 31, consisted of a set of gear wheels, functions as an entity. In other words upon movement (either rotation or axial movement, in relation to the main axis of the differential), both the planetary gear members 311a, 311b, 312a, 312b and the connection part 32 move. Furthermore additional planetary gear members engaging to each sun can be added, following the previously mentioned features of the presented planetary gear members. For example four planetary gear members per sun can be added, resulting in additional planetary gear members 311c, 311d engaged to sun gear 11 and 312c, 312d engaged to sun gear 12, following the previously mentioned principles of the configuration.

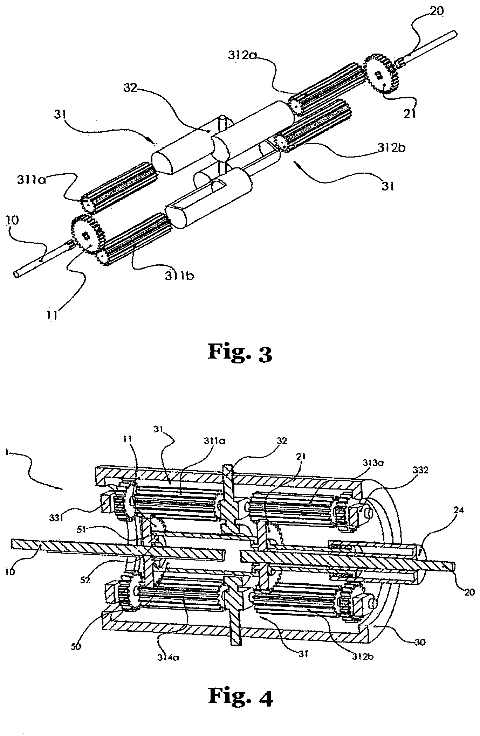

Fig. 3 illustrates individual parts of the differential 1 of Fig. 1. In this presentation a clearer view of the connection part 32 is given and the layout of the planetary gear 31 in general. The planetary cases provided in the connection part 32 house the planetary gear members 311a, 311b, 312a, 312b. The skilled person understands that although the connection part 32 has the ability to rotate (due to the provided degree of freedom), the connection part 32 must not necessarily rotate as a result thereof. Instead, even though the connection part 32 could basically rotate, it is hindered by the configuration of the planetary gear members 311a, 311b, 312a, 312b in each sun gear and the engagement of gear teeth of the planetary gear members 311a, 311b, 312a, 312b with the respective sun gears 11, 21. Hence, instead of actually rotating in a plane orthogonal to a radial direction of the sun gears, the connection part 32 cannot rotate as a result of the two (or four etc.) planetary gear members engaging on each sun gear, resulting in equal and opposite torques in relation to the axis of rotation of the connection part 32. Thereby, eventually different torque ratios are transferred to the half-shafts 10, 20 due to the various axial positions (in relation to the main axis of the differential case) of the third gear 31 that are assisted by the provided additional degree of freedom of the third gear 31. Planetary gear members 311a, 311b, 312a, 312b will rotate around their axis, on top of the sun gears 11, 21 when there is a difference between the angular speeds of each sun gear 11, 21 (e.g. when a vehicle turns) as do in common planetary differentials.

Fig. 4 illustrates a sectional view of a differential 1 according to an alternative embodiment of the invention. In this alternative configuration the actuating components are the gear wheels provided as sun gears in the presented planetary differential. In comparison to the configuration presented in Figs. 1 to 3 the main principle is the same (i.e. a component is actuated and various torque ratios are transferred to each of the output members 10, 20) but the actuated components in this alternative are the first and second gears (i.e. sun gears) instead of the actuated third gear presented in the previous figures (the third gear is provided axially fixed, but again the additional degree of freedom is given in this alternative configuration). As mentioned above the first and second gears are configured axially movable by actuating means, providing a range of torque ratio outputs for the first and second output member 10, 20. Sun gears 11, 21 are torque proofed to their respective output members 10, 20 (i.e. when the one rotates, the other rotates as well), but can be additionally repositioned in an axial manner and the third gear and the connection part 32 are configured movable in a plane orthogonal to a radial direction of the first gear.

In addition the first and second gears 11, 21 are connected to each other by means of a connection cylinder 50. By the addition of the connection cylinder 50 it is obvious that if the first gear is repositioned away from the center of the differential, the second gear will be repositioned respectively closer to the center of the differential. The connection of the first and second gears does not rotational fix the one to the other but allows for an independent rotation of the two connected components 11, 21. As mentioned before the rotation of the first and second gears may be independent but the axial movement of the first and second gear is in respect to each other (if the one is axially moved the other follows).

The connection between the connection cylinder 50 and each of the sun gears takes place with the provision of the engagement means 51 of the connection cylinder 50 and the engagement means 52 of the first and second gears provided on the adjacent faces of the sun gears. The interaction between the engagement means 51 and the engagement means 52 provides an axial engagement between the first and the second gears but not a rotational one.

In this alternative the connection part 32 is also modified due to the different layout and the alternative configuration of the planetary gear 31. Planetary gear 31 is consisted of a series of gear wheels and gear wheel shafts. On each sun gear two planetary gear members mesh but in addition two free planetary gear members mesh also. In addition the planetary gear members do not mesh with each other but a series of gear wheels assist with the opposite rotation of the planetary gear members. The detailed layout of both the planetary gear 31, consisted of a set of gear wheels, and the connection part 32 will be explained in further detail below.

The repositioning of the sun gears 11, 21 occurs with the help of actuating means depicted in the illustration as an actuator 24. The actuator 24 is torque proofed to the assigned output member/half shaft 20 and pushes (or pulls) the assigned sun gear 21. By this axial displacement of the sun gear 21 and due to the fact both sun gears 11, 21 are connected with the connection part 50 a range of torque ratios can be distributed to both output members 10, 20.

As previously mentioned the position of the interaction between the sun gears 11, 21 and the planetary gear 31, which is consisted of a set of gear wheels, in relation to the center of the differential results in different forces acting on each of the sun gears 11, 21. In case that the interaction between the sun gears 11, 21 and the planetary gear 31, which is consisted of a set of gear wheels, is at the same distance in relation to the center of the differential, the torque ratio is equal to 1 and there is no variation of torque outputs between the two output members 10, 20. If the distance differs, diverse forces act on each of the sun gears 11, 21 resulting in a torque ratio non equal to 1 which is distributed to the two output members 10, 20.

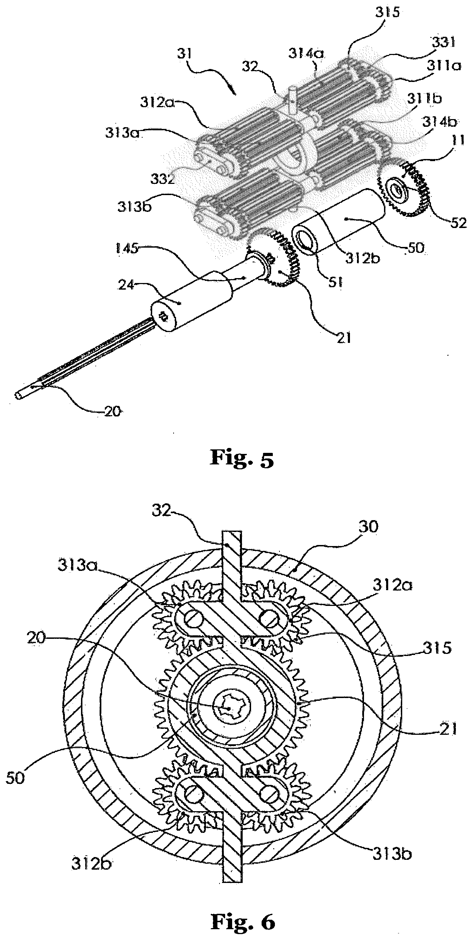

As can be seen more clearly in Fig. 5 the planetary gear 31 is consisted of multiple planetary gear members, planetary gear shafts and assisting gears. As mentioned before on each sun gear 11, 21 two planetary gear members mesh accompanied by two assisting free gears. As depicted, on the first gear provided as sun gear 11, planetary gear members 311a, 311b mesh accompanied by free planetary gears 314a and 314b. Similarly on the second gear provided as sun gear 21, planetary gear members 312a, 312b mesh accompanied by free planetary gears 313a and 313b. As a result in every sun gear four gears mesh, consisted of two planetary gear members (which transfer torque) and two free planetary gears (that do not transfer torque) evenly distributed, and positioned diametrically opposed around the circumference of the sun gear. As previously mentioned additional planetary members can be added (both torque transferring planetary gear members and torque free planetary gear members) following the features of the presented gear members.

Both the planetary gear members 311a, 311b, 312a, 312b and the free planetary gears 313a, 313b, 314a, 314b have additional planetary shafts that are supported by the connection part 32 in two respective recesses. In the presented layout planetary gear member 312a is concentric to free planetary gear 314a and share the same planetary shaft. The difference in operation between every planetary gear member and the coaxial free planetary gear lays in the fact that each planetary gear member is torque proofed to the assigned planetary shaft (i.e. when the planetary gear member rotates so does the assigned shaft), where in contrast the free planetary gear member can rotate in a different manner in relation to the common planetary shaft, without any torque transfer. It is going without saying that both the free planetary gear members, and the torque transferring planetary gear members assigned on the same sun gear have the same direction of rotation. The well-known operation of the planetary differential is a result of the interaction between the sun gears 11, 21 and the planetary gear members 311a, 311b, 312a, 312b.

In addition to the planetary gear members and to the free planetary gears, assisting gears 315 are provided. The assisting gears 315 are provided since no planetary gear member is meshed with another planetary gear member, so that an opposite rotation between the assigned planetary gear members to each of the sun gears is granted. Every assisting gear 315 (in the presented layout 8 assisting gears are provided, 2 for each planetary shaft) is torque proofed to the assigned planetary shaft (i.e. when the assigned assisting gear rotates, so does the planetary shaft), assisting with the well-known operation of the planetary differential. Having said that it is clear that when a planetary gear member rotates, the assigned shaft and the assigned assisting gears 315 rotates as well, resulting in an opposite rotation of the meshed assisting gears of the coupled planetary gear member (and as a result an opposite rotation of the coupled planetary gear member and the assigned shaft). For example if the planetary gear member 312a rotates in a clock wise rotation, the assigned shaft of the planetary gear member 312a rotates also in a clock wise rotation and so do the two assisting gears 315 assigned to the planetary gear member 312a (one on each end of the assigned shaft). Since the assisting gears 315 mesh with their coupled assisting gears assigned to the planetary gear member 311a, the torque proofed system of the assisting gears 315-assigned planetary shaft-planetary gear member 311a will rotate in a counter clockwise rotation. As mentioned before the free planetary gears 313a, 314a (assigned to the planetary gear members 311a, 312a) are free to rotate but follow the direction of rotation (if the planetary gear member rotates clock wisely so does the coupled free planetary gear, with their assigned sun gear rotating in an anti-clockwise direction) of their coupled planetary gear members 311a, 312a without transferring any torque.

The planetary shafts are supported by the connection part 32 and although a planetary shaft rotation is allowed, an axial displacement of the planetary shafts is not. The connection part 32 provides for a fixed orientation for every planetary gear member in relation to each other. In addition the previously mentioned degree of freedom (preferably) provided to the third gear 31 (i.e. rotation in a plane orthogonal to a radial direction of the sun gears) is granted by the ability of rotation of the connection part 32 which is supported by the differential case 30. In addition as the differential case 30 rotates (for example by an engine input), due to the interaction of the case with the connection part 32, the third gear 31, consisted of a set of gear wheels, rotates in a similar manner and so does the sun gears 11, 21 as a result of the sun gear interaction with their assigned planetary gear members (and their coupled free planetary gears), transferring forces and torques. Preferably supporting links 331, 332 are provided at the ends of every coupled planetary shaft which are incorporated in order to retain the distance between the planetary gear members. The ends of the planetary shafts are not fixed to the housing 30.

In this illustrated configuration the repositioning of the sun gears 11, 21 (and as a result the various torque ratios) is achieved with the help of an actuator serving as actuating means. The actuator is consisted of a body 24 torque proofed to the assigned output member (in the presented configuration the output member 20) and an actuator moving disk 145. The torque proofing of the actuator is achieved via a splined hole, which is in communication with a splined outer surface of the half shaft 20. Thus, the half shaft 20, the assigned sun gear 21 and the assigned actuator are rotationally fixed to each other (it is going without saying that the sun gear 11 is also rotationally fixed to its assigned output member 10). The actuator moving disk 145 is connected to the sun gear 21 for moving it axially along the output member 20. Since both sun gears 11, 21 are connected to each other by means of the connection cylinder 50 as mentioned above, the movement of the one (by the actuating means) drifts the other in the same direction. It is going without saying that both the type of the presented actuator and its positioning is not restrictive and other types of actuating means or positioning of said actuating means can be adopted always following the basic functionality of the innovation.

In the section cut presented in Fig. 6 a more clear view of the interaction between each gear is presented. As can be seen the planetary gear members 312a, 312b mesh with the sun gear 21 and so does the free planetary gear members 313a, 313b. In contrast the planetary gear members 312a, 312b are not meshed with their coupled free planetary gear members 313a, 313b. The interaction between the planetary gear members of the system is achieved with the help of assisting gears 315.

In addition the shape/form of the connection part 32 is clearer and the recesses provided for housing the planetary gear shafts can be seen. Furthermore a circular recess is provided in the middle of the connection part 32 so that the connection cylinder 50 can be moved axially without interference between the two. The circular recess has a larger inner diameter in relation to the outer diameter of the connection cylinder 50. As presented before the planetary gear members for each sun gear are arranged in a diametrically opposed way (and so do the free planetary gears), evenly distributed around the circumference of the sun gears (again additional planetary members can be added with the same features as the presented planetary members)

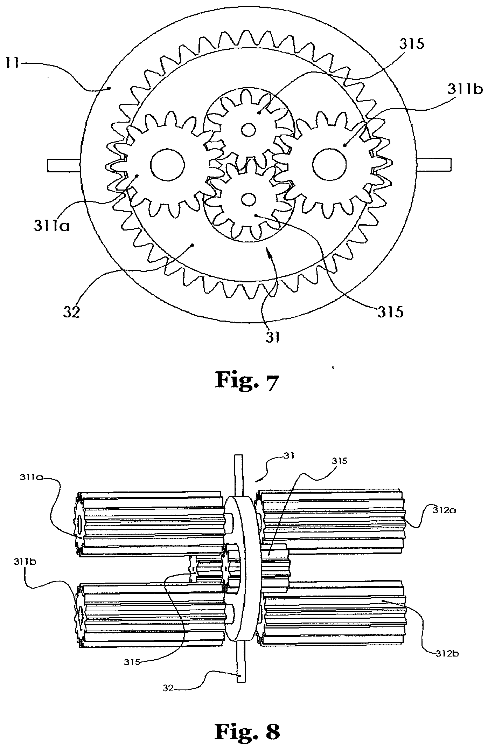

In the illustration presented in Fig. 7 a yet another alternative is presented. In this alternative the planetary differential is consisted of internal ring gears provided as sun gears which are configured movable by actuating means. This view is such that the half shafts extend orthogonal to the illustrated view. In this embodiment the first gear is provided as a first internal ring gear 11, engaging a planetary gear 31 (consisted of a set of gear wheels) provided inside the first internal ring gear 11. The person skilled in the art understands that the movement of the internal ring gear 11 is achieved by actuating means that are not presented in this configuration and achieve similar results to the previously presented configuration. It is going without saying that only the first internal ring gear 11 is presented but there is a corresponding second internal ring gear 21 which is of the same structure as the first gear 11. The internal ring gears serving as sun gears can further be moved along the respective half shafts by actuating means as previously described. As discussed above when the sun gears are provided axially movable the third gear is provided axially fixed. Again it is obvious that the sun gears can be axially fixed and the axial (in relation to the main axis of the differential) movement of the third gear 31 can lead to a torque variation as previously described. Moreover another planetary member 311b, diametrically opposed to the planetary gear member 311a, evenly distributed around the circumference of the sun gear 11 can be seen, engaging the sun gear 11.

Further, a connection part 32 is provided, which provided for the same functionality as described in the previously mentioned configurations. In particular the connection part 32 may preferably provide for an additional degree of freedom, as the connection part 32 have the ability to rotate in a plane orthogonal to a radial direction of the first internal ring gear 11. Similarly, as described in the previously mentioned configurations, essentially the connection part 32 although has the ability to rotate it will not do so, due to the configuration/positioning of the planetary gear members 311a, 311b.

Fig. 8 illustrates individual parts of the differential illustrated in Fig. 7. The person skilled in the art understands that the concepts described above with regard to the embodiments in Fig. 1-6 similarly apply to the embodiments illustrated in Figs. 7-8. Hence, as described above with regard to the other embodiments, different torques can eventually be provided to the output members (e.g. half shafts), by moving the first and second gears or the third gear to the desired axial positions (in relation to the main axis of the differential).

In this alternative the planetary gear members 311a, 311b, 312a, 312b are provided, with the planetary gear member 311a positioned coaxially to 312a and the planetary gear member 311b coaxially to 312b, with every couple of planetary gear members (311a and 312b form one couple etc.) sharing a planetary gear shaft, with the couple not being torque proofed to each other. In other words on each couple of planetary gear members every planetary gear member is free to rotate on each own. The planetary gear shafts are housed in recesses in the connection part 32 which also provides additional overlapping recesses for the assisting gears 315. On the overlapping segment of the recesses provided for the assisting gears, the assisting gears 315 mesh, resulting in an opposite rotation of the planetary gear members 311a, 311b upon rotation of the planetary gear members 312a, 312b. As it is obvious every pair of planetary gear members (311a and 311b form a pair etc.) rotate with the same direction of rotation. In addition every planetary gear member mesh with only one assisting gear 315 (planetary gear members 311a and 311b share an assisting gear 315, and so do the planetary gear members 312a, 312b, but the assisting gears are different for each couple), and all of the gears are supported in the connection part 32.

The person skilled in the art hence understands that the concept of setting a desired torque ration is not limited to a sun and planetary gear system as illustrated exemplarily in Fig. 1, but can also applied to other setups of differentials. In addition the torque variation of the presented differential is a result of the position of the interaction between the first and second gear 11, 21 and the third gear 31, consisted of a set of gear wheels, in relation to the center of the differential. The position of this interaction is altered by actuating means either by moving the third gear 31 (consisted of a set of gear wheels) as mentioned in the configuration presented in Figs. 1 to 3 or by actuating the first and second gears 11, 21 as presented in the alternative configurations. In addition the provided degree of freedom to the third gear 31 (i.e. rotation in a plane orthogonal to a radial direction of the sun gears) assists with the definition of the torque ratio between the output members 10, 20. As mentioned although the third gear 31, which is consisted of a set of gear wheels, has the ability to rotate in a plane orthogonal to a radial direction of the sun gears, due to the layout of the configuration, a rotation will not take place. The prevention of rotation (the rotation is provided by the additional degree of freedom) of the third gear is a result of the engagement of the planetary members with their assigned sun gears, which result in equal and opposite torques in relation to the axis of rotation of the connection part 32 (as mentioned before the connection part 32 and the third gear 31 share one axis of rotation, perpendicular to the main axis of the differential). Furthermore it is obvious that many differential configurations are possible with a combination of the presented features (e.g. fixed inner ring gears serving as first and second gears with actuated third gear) always following the main principles behind the innovation. Finally it is going without saying that the number of planetary gear members or the planetary gears in general may vary depending on the needs. In any case the planetary gear members will be provided as at least one pair on each sun gear, positioned diametrically opposed to one another, and every torque transferring planetary member on each of their assigned suns will be coupled to at least one of the torque transferring planetary gear members of the other sun, resulting in opposite rotation of the one upon rotation of the other.

## Claims

1. Differential (1), in particular an automotive differential, for transferring a rotational force from an input member to a first and a second output member (10, 20), which share a common axis of rotation, comprising:
a first gear (11) connected to the first output member (10);
a second gear (21) connected to the second output member (20);
a third gear (31), consisted of a set of gear wheels, positioned circumferentially engaging both the first and second gear (10, 20); and
actuating means adapted to move at least one of the previously mentioned gears (11, 21, 31) to control a torque ratio transferred to the first (10) and second (20) output member.

2. The differential (1) of claim 1, wherein the third gear (31), consisted of a set of gear wheels, is configured movable in a plane orthogonal to a radial direction of the first gear (11).

3. The differential (1) of claim 1 or 2,
wherein the first, second and third gear (11, 21, 31) form a sun and planetary gear system,
wherein the third gear (31), consisted of a set of gear wheels, is provided as a planetary gear set,
wherein the first gear (11) and the second gear (21) are provided as sun gears
wherein at least one of the gears (11, 21, 31) is axially movable between at least a first and a second axial position, wherein a distance between the first axial position to the center of the differential (1) is different to a distance between the second axial position and the center of the differential (1), depending on the needs,
wherein the actuating means are adapted to move the at least one gear (11, 21, 31) between at least the first and the second axial position.

4. The differential (1) of any one of the preceding claims, further comprising a housing (30) engageable by the input member,
wherein the housing (30) supports the planetary gear,
wherein the planetary gear comprises a first planetary gear member (311) and a second planetary gear member (312),
wherein the first planetary gear member (311) is engaged by the first gear (11) and the second planetary gear member (312) is engaged by the second gear (21),
the differential further comprising a connection part (32) housed in the housing (30), torque proofed to the housing (30) connecting the first planetary gear member (311) and the second planetary gear member (312),
wherein the connection part (32) is configured movable relative to the housing (30) in a plane orthogonal to a radial direction of the first gear (11).

5. The differential (1) of any one of the preceding claims, wherein the third gear (31), consisted of a set of gear wheels, is consisted of two gear members (311, 312),
wherein each of the said gear members (311, 312) is consisted of torque transferring gear wheels, wherein each torque transferring gear wheel is distributed circumferentially around their assigned sun gears (11, 21), with every two diametrically opposed torque transferring gear wheels creating a pair of gear wheels,
wherein each of said pair of gear wheels is constantly engaging with their assigned sun gears (11, 21),
wherein each of said torque transferring gearwheels of the one gear member (311) is connected to at least one of the torque transferring gear wheels of the other gear member (312) in a way that when the one rotates on its main axis in a clockwise manner, the other rotates on its main axis in an opposite direction, creating a couple of gear wheels
wherein the planetary gear members are housed in connection part (32) which connects the members of the couple of gear wheels and the members of the pair of gear wheels, providing for a fixed orientation to every member in relation to each other,
wherein every gear member follows the movement of the connection part (32).

6. The differential (1) of any one of the preceding claims, wherein the third gear (31), which is consisted of a set of gear wheels, is consisted of at least two pairs of gear wheels and two couples of gear wheels.

7. The differential (1) of any one of the preceding claims, wherein the connection part (32) allows for rotation in a plane orthogonal to a radial direction of the first gear.

8. The differential (1) of any one of the preceding claims, wherein the connection part (32) houses and connects the first planetary gear member (311) and the second planetary gear member (312),

9. The differential (1) of any one of the preceding claims, wherein the first planetary gear member (311) extends through a first hole (322) of the connection part (32), and wherein the second planetary gear member (312) extends through a second hole (322) of the connection part (32), wherein the first and second holes may be provided as one.

10. The differential (1) of any one of the preceding claims, wherein the actuating means comprises a spring and/or a connection to external driving means, in particular wherein the external driving means comprise a tie rod or a hydraulic pump of a vehicle.

11. The differential (1) of any one of the preceding claims, wherein the actuating means are adapted to move the at least one of the gears (11, 21, 31) based on driving conditions.

12. The differential (1) of any one of the preceding claims, wherein the actuating means are adapted to move the at least one of the gears (11, 21, 31) such that the torque transferred to the first output member (10) can be different from the torque transferred to the second output member (20), defining a torque ratio between the output members (10, 20) depending on the needs.

13. Method for operating a differential (1) according to any one of the preceding claims, comprising:
determining torque ratio to be transferred to the output members (10, 20); and
moving the at least one of the gears (11, 21, 31), based on the determined torque ratio between the output members (10, 20), so that a torque transferred to the first output member (10) and to the second output member (20) are in relation to each other, as to the determined torque ratio.

14. The method of claim 13, further comprising the step of sensing driving conditions, and wherein the step of determining the torque ratio between the output members (10, 20) is based on the sensed driving conditions.

15. The method of claim 13 or 14, wherein the first torque can be different from a second torque transferred to the second output member (20) depending on the needs.

16. Vehicle comprising a differential (1) according to any one of claims 1 to 15.
